Europäisches Patentamt

(19) European Patent Office

Office européen des brevets

(11) Numéro de publication : **0 117 159 B1**

(12) **FASCICULE DE BREVET EUROPÉEN**

(45) Date de publication du fascicule du brevet :
07.05.86

(51) Int. Cl.⁴ : **B 01 D 25/12**

(21) Numéro de dépôt : **84400001.8**

(22) Date de dépôt : **02.01.84**

(54) **Filtre presse comprenant des moyens d'extraction des boues.**

(30) Priorité : **20.01.83 FR 8300816**

(43) Date de publication de la demande :
**29.08.84 Bulletin 84/35**

(45) Mention de la délivrance du brevet :
**07.05.86 Bulletin 86/19**

(84) Etats contractants désignés :
**DE GB IT NL SE**

(56) Documents cités :
**FR-A- 1 234 366
FR-A- 1 323 483
FR-A- 2 099 854
FR-A- 2 347 077
FR-A- 2 382 257**

(73) Titulaire : **Société L. CHOQUENET (S.A.)
19 rue Charles Brunette
F-02301 Chauny Cedex (FR)**

(72) Inventeur : **Carle, Jean Claude
Rue Gaston Trioux Viry Noureil
F-02300 Chauny (FR)**
Inventeur : **Choquenet, Pierre Louis Jean
Allée des Promenades
F-02300 Chauny (FR)**

(74) Mandataire : **Bugnon-Hays, Claudine
PATCO S.A. 5, route Saint Gens B.P. 64
F-84200 Carpentras (FR)**

## Description

La présente invention concerne un filtre presse comprenant deux postes fixes reliés entre eux par un cadre constitué d'au moins deux rails parallèles sur lesquels est montée coulissante une série de plateaux entre lesquels s'étendent des toiles filtrantes, l'un des postes fixes comprenant une tête mobile pour serrer les plateaux les uns contre les autres pendant la phase de filtration et des moyens étant prévus pour écarter les plateaux les uns des autres pendant la phase de débâtissage.

Suivant une disposition connue dans de tels filtres, le filtre est équipé d'une seule toile s'étendant en zig-zag entre les différents plateaux sur toute la longueur du filtre. Un tel filtre est par exemple décrit dans le document FR-A-2 347 077. Une telle disposition présente l'inconvénient qu'il est difficile de tendre cette toile unique convenablement pendant la phase de filtration et que la rupture ou l'usure en une partie de la toile nécessite le remplacement de la totalité de la toile ce qui constitue une opération longue et coûteuse.

De plus, lors du débâtissage des plateaux, les gâteaux ne tombent pas toujours sous l'action de la gravité mais restent souvent accrochés à la toile. Ceci conduit à des interventions manuelles longues pour décrocher les gâteaux entre les brins de la toile.

Pour remédier à ce dernier inconvénient, on a déjà proposé (procédé LAROX) d'utiliser pour chaque plateau une toile séparée formant une boucle fermée et qui est guidée sur des rouleaux de guidage et d'entraînement disposés au-dessous et au-dessus de chaque plateau. Dans ce cas, le filtrage s'effectue à travers les deux brins s'étendant en regard du plateau ce qui entraîne des risques de dépôts de déchets entre les deux brins qui peuvent difficilement être évacués. De plus, suivant cette structure connue uniquement l'une des faces de chaque plateau comprend une surface cambrée coopérant avec la toile filtrante. Ceci se traduit par un nombre de plateaux donné à une réduction de la moitié de la capacité du filtre presse. De plus, dans ce cas la face souillée de la toile est amenée dans certaines parties en contact avec la face plane du plateau voisin. Enfin, les moyens de guidage des toiles sont complexes et se prêtent difficilement à la technique des filtres presses. En effet, chaque toile comprend des moyens d'entraînement séparés ce qui conduit à une structure complexe et coûteuse car ces moyens doivent être déplacés avec chaque plateau lors des opérations de débâtissage et de fermeture du filtre.

Suivant une autre disposition connue applicable uniquement aux filtres presses verticaux (procédé PARMENTIER), chaque plateau est entouré d'une boucle sans fin d'une toile filtrante qui passe sur deux rouleaux disposés à l'extérieur du plateau qui comprennent des moyens pour entraîner la toile.

Les rouleaux sont installés les uns au-dessous des autres dans des paliers montés coulissants dans un bâti commun. Les rouleaux sont ainsi complètement indépendants des plateaux correspondants.

Le cadre porte des moyens d'entraînement par embrayages à commande pneumatique et des motoréducteurs.

Dans cette structure, on utilise également une seule face de chaque plateaux et les moyens de commande des toiles et des plateaux sont extrêmement complexes et coûteux.

La présente invention a pour objet de concevoir un filtre presse comprenant pour chaque plateau une toile séparée et qui permet de remédier auxdits inconvénients des deux dites structures de la technique antérieure.

En outre, l'invention a pour objet de concevoir des moyens de guidage et de commande des toiles individuelles, de structure simple, pouvant être adaptés à des filtres presses horizontaux et verticaux existants.

Le filtre presse suivant l'invention est du type comprenant pour chaque plateau au moins une toile montée mobile par rapport au plateau entre une position de filtration et une position de débâtissage dans laquelle la partie filtrante est dégagée vers l'extérieur pour l'extraction du gâteau de filtrage.

Selon l'invention, chaque plateau comprend un cadre commandant le déplacement des moyens d'extraction du gâteau entre une position de filtration et une position de débâtissage, ledit cadre étant constitué d'au moins deux montants montés coulissants dans des guides prévus sur les bords latéraux de chaque plateau et qui portent à leurs extrémités libres des traverses dont l'une porte deux doigts latéraux coopérant avec une barre de commande actionnée par des moyens de commande destinés à déplacer l'ensemble des cadres du filtre.

Lorsque le filtre est du type dans lequel chaque plateau comprend deux faces cambrées coopérant chacune avec une toile filtrante séparée, ledit cadre porte à ses extrémités libres des paliers pour deux paires de rouleaux de guidage, à l'autre extrémité du cadre étant prévu en regard de chacun des rouleaux un élément racleur, l'un des brins de retour des deux toiles étant fixé par l'intermédiaire de tringles et de dispositifs tendeurs sur l'un des petits côtés du plateau tandis que l'autre brin de retour est fixé par des tringles sur des crochets prévus sur l'autre petit côté dudit plateau.

Dans ces modes de réalisation du filtre selon l'invention, la boue à filtrer est amenée dans chaque chambre de filtration d'une manière connue par un tuyau souple relié à une pipette engagée d'une manière étanche entre deux toiles filtrantes.

L'invention concerne également des filtres du type comprenant un empilement vertical de plateaux dont chacun comporte une face inférieure cambrée et une face supérieure plane devant laquelle s'étend la toile filtrante.

Suivant l'invention, ledit cadre porte à ses extrémités libres des paliers pour deux rouleaux de guidage et à l'une de leurs extrémités deux guides latéraux coopérant avec la barre de commande desdits moyens de commande, l'un des brins de retour de la toile étant fixé par l'intermédiaire d'une tringle et un dispositif tendeur sur l'un des petits côtés du plateau tandis que l'autre brin de retour est fixé par une tringle sur un crochet prévu sur l'autre petit côté dudit plateau.

Enfin, dans les filtres à plateaux à deux faces cambrées du type comportant des plateaux intercalaires lisses servant à l'introduction du liquide à filtrer, l'invention prévoit que le cadre mobile de chaque plateau intercalaire comporte deux dispositifs de raclage se déplaçant le long des faces lisses du plateau pour décoller le gâteau.

D'autres réalisations et avantages de l'invention ressortiront de la description qui va suivre montrant, à titre d'exemple, trois modes de réalisation du perfectionnement selon l'invention et où l'on se réfère aux dessins annexés.

Sur ces dessins :

La figure 1 est une vue en élévation latérale schématique montrant l'application de l'invention à un filtre à plateaux chambrés verticaux dans les chambres comportant deux toiles filtrantes.

La figure 2 est une vue en élévation frontale schématique du plateau, de la toile et de son cadre mobile représentés à la figure 1.

La figure 3 est une vue en élévation latérale schématique montrant l'application de l'invention à un filtre horizontal à plateaux chambrés et plateaux intercalaires d'alimentation verticaux munis de leur cadre mobile de raclage.

La figure 4 est une vue en élévation latérale montrant l'application de l'invention à un filtre vertical à plateaux horizontaux.

La figure 5 est une vue de dessous de l'ensemble représenté à la figure 4.

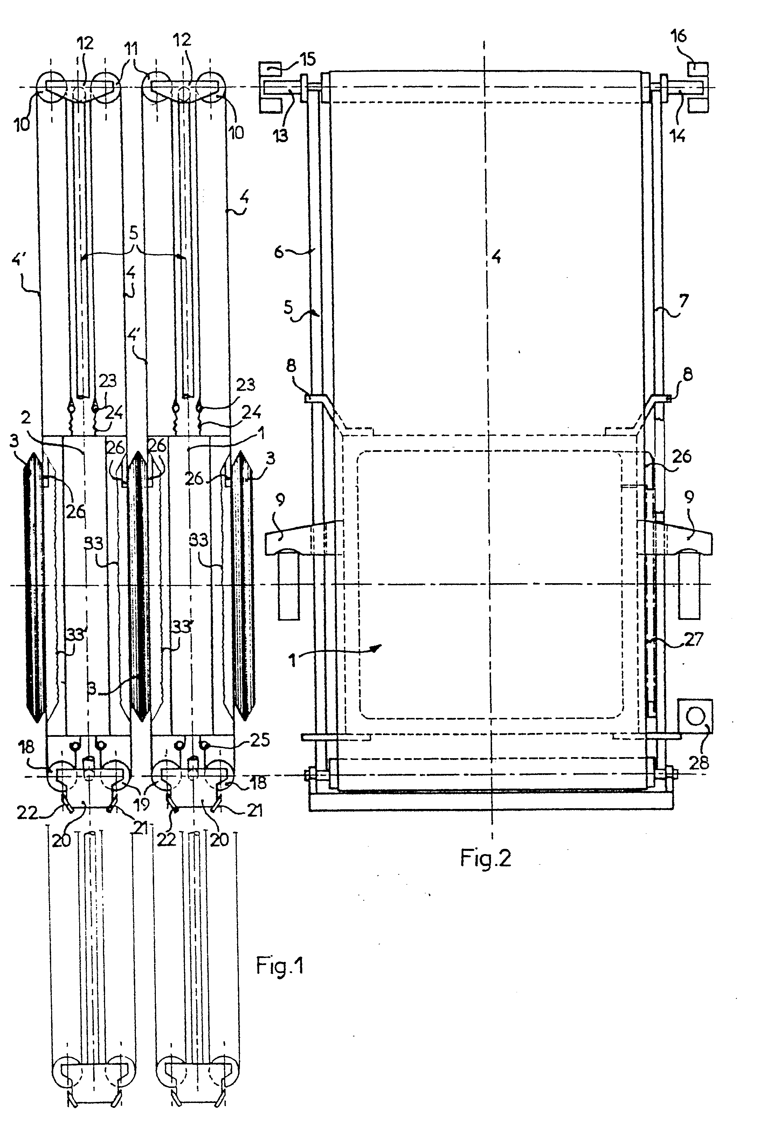

A la figure 1, on voit un plateau chambré 1 comportant une chambre sur chaque face 33, 33′ et le plateau chambré adjacent (2). Le gâteau 3 a été formé entre les deux toiles filtrantes 4 et 4′. Suivant l'invention chaque plateau comprend un cadre mobile 5 comportant au moins deux montants 6 et 7 qui peuvent coulisser dans les guides latéraux 8 et 9. A l'une des extrémités du cadre se trouve une paire de rouleaux 10, 11 supportés par des paliers 12 solidaires du cadre. En outre, l'extrémité supérieure du cadre 5 comporte des doigts latéraux 13 et 14 coopérant avec des rails de levage 15 et 16 communs à tous les plateaux du filtre presse. Les rails 15 et 16 peuvent être déplacés par des moyens de commande convenables (vérins hydrauliques, pignons et chaînes) entre une position supérieure et une position inférieure représentées en tirets à la figure 2. L'extrémité inférieure du cadre 5 comporte une paire de rouleaux 18, 19 montés sur des paliers 20 solidaires du cadre 5 et portant en outre une paire de racleurs 21, 22.

Le montage des deux toiles filtrantes 4, 4′ d'un plateau est symétrique. La toile 4 s'étend devant la chambre 33 du plateau 1. Sa partie supérieure s'enroule autour du rouleau 10 et s'accroche à l'aide d'une tringle 23 à un dispositif tendeur 24. Le brin inférieur s'enroule autour du rouleau 18 et son extrémité libre est accrochée par une tringle 25 à des crochets fixés sur la partie inférieure du plateau 1.

La boue à filtrer est amenée dans chaque chambre par une pipette 26 engagée d'une manière étanche entre deux toiles filtrantes de deux plateaux voisins 1 et 2. Cette pipette est reliée par un tube souple 27 à un conduit d'alimentation de boue 28 constitué de préférence d'une série de tronçons solidaires des plateaux et munis de joints d'étanchéité et qui forment lorsque le filtre est fermé, le conduit d'alimentation 28.

Lorsque le cadre 5 de chaque plateau du filtre s'étend dans sa position supérieure (représentée en traits pleins aux figures 1 et 2), les parties actives des toiles 4, 4′ sont situées en regard des parties chambrées 33, 33′ des plateaux, le filtre est alors fermé et la boue à filtrer est envoyée par le conduit 28, la tubulure 27 et la pipette 26 dans la chambre de filtration formée entre deux toiles voisines.

Après la phase de filtration, les plateaux sont écartés d'une manière connue les uns des autres et les cadres 5 sont amenés par les rails 15, 16 dans leur position inférieure (représentée en tirets sur la figure 1).

Les toiles 4 et 4′ sont ainsi obligées de descendre car leur brin de retour supérieur se raccourcit alors que leur brin inférieur s'allonge. Les toiles entraînent le gâteau vers le bas où il est détaché par les éléments racleurs 21, 22. Ensuite, le cadre mobile 5 est ramené dans sa position supérieure pour une nouvelle opération de filtration par les rails 15, 16. Sur les paliers inférieurs 20 entre les rouleaux 18 et 19 est montée une rampe de lavage non représentée reliée à une source d'eau sous pression ce qui permet lors d'un fonctionnement à blanc du dispositif de décolmater les toiles filtrantes sans les démonter.

La figure 2 est une vue en élévation frontale schématique du dispositif représenté à la figure 1 et décrit ci-dessus.

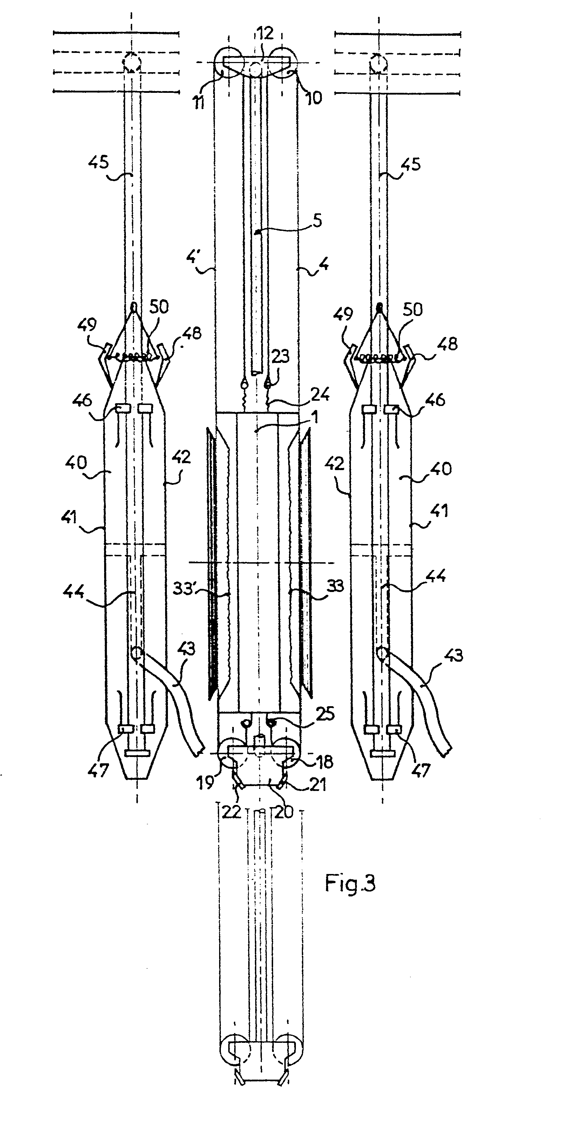

La figure 3 représente l'application de l'invention à un filtre comprenant les plateaux chambrés à cadre mobile de la figure 1 et le plateau intercalaire 40 d'introduction de liquide à filtrer. Ce plateau 40 maintenu sur le bâti du filtre presse par des poignées non représentées comporte deux faces lisses 41 et 42 de sorte que lorsque le filtre presse est fermé, le gâteau se forme uniquement dans les chambres 33 et analogues du plateau 1. Un tuyau souple 43 amène la boue dans une canalisation 44 interne au plateau 40 et débouchant sur les deux faces 41 et 42. Le plateau 40 est muni d'un cadre mobile 45 comportant au moins deux montants coulissant dans des guides 46 et 47 solidaires du plateau 40. Sur les montants du cadre 45 sont fixés de part et d'autre du plateau des racleurs 48 et 49 retenus par un système élastique 50. Le haut du cadre 45 est engagé dans les mêmes rails de commande 15 et 16 que le cadre 5 du plateau chambré 1. Lorsque le cadre 45 descend, les racleurs 48, 49 descendent respectivement le long des faces 41, 42 du plateau 40 et font tomber les gâteaux qui sont restés collés sur lesdites faces. Sans sortir du cadre de l'invention on pourrait construire des plateaux mixtes portant une chambre sur une face et un racleur sur l'autre.

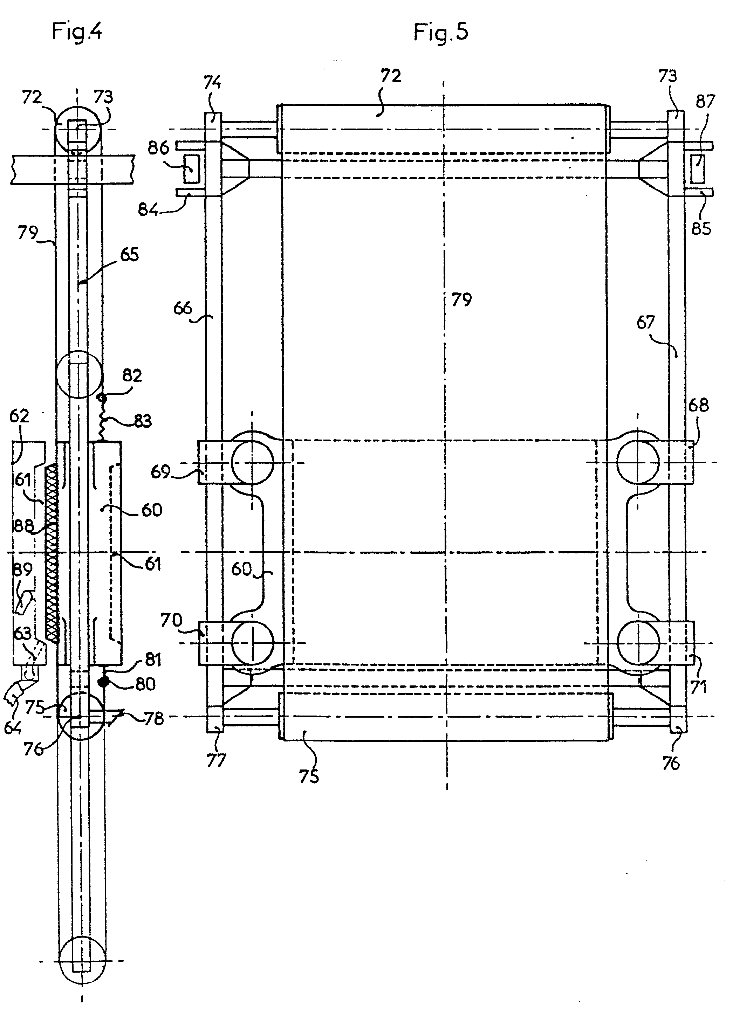

Les figures 4 et 5 montrent l'application du montage selon l'invention à des filtres presses à bâti vertical et plateaux horizontaux.

Dans ce mode de réalisation un plateau 60 disposé horizontalement comporte une face inférieure chambrée 61 et une face supérieure plane 62 portant sur la surface en regard de la chambre 61 des cannelures d'écoulement de filtrat. Une canalisation interne 63 reliée à un tuyau souple 64 amène la bque à filtrer dans la chambre 61. Le fond de la chambre 61 est tapissé d'une manière connue d'une membrane 88 reliée à une arrivée d'air comprimé 89 pour compacter le gâteau et l'éjecter de la chambre. Un cadre mobile 65 comportant au moins deux montants 66 et 67 peut coulisser dans des guides latéraux 68, 69, 70, 71 du plateau 60. L'extrémité arrière du cadre 65 porte un rouleau 72 monté dans des paliers 73, 74 fixés sur les montants 66 et 67. L'extrémité avant du cadre 65 comporte de même un rouleau 75 monté dans des paliers 76, 77 fixés sur les montants 66, 67. Les paliers 76, 77 portent également un racleur 78.

La toile filtrante 79 attachée par une tringle 80 à des crochets 81 fixés sur la partie avant du plateau, s'enroule autour du rouleau 75, passe sur la face du plateau, s'enroule autour du rouleau 72 et est attachée par une tringle 82 à un dispositif de tension 83 fixé sur la partie arrière du plateau.

L'extrémité arrière du cadre comporte de plus au voisinage du rouleau 72 deux fourches latérales 84, 85 coopérant avec des barres 86, 87 commandant le déplacement dans le plan horizontal du cadre mobile 65.

Le fonctionnement de cette disposition est identique à celui des modes de réalisation représentés aux figures 1, 2 et 3. Pendant la phase de filtration le cadre 65 et la toile 79 s'étendent dans la position représentée en traits pleins aux figures 4 et 5. Pendant la phase de débâtissage le cadre est amené dans la position représentée en tirets à la figure 4. La toile 79 extrait ainsi le gâteau 88 et l'élément racleur 78 le dégage de la toile au fur et à mesure de son passage sur le rouleau 76.

Bien entendu, l'invention n'est pas limitée aux modes de réalisation décrits et représentés ici mais on peut y apporter de nombreuses modifications sans pour cela sortir du cadre de l'invention.

**Revendications**

1. Filtre presse comprenant deux postes fixes reliés entre eux par un cadre constitué d'au moins deux rails parallèles sur lesquels est montée coulissante une série de plateaux (1, 2) entre lesquels s'étendent des toiles filtrantes (4), l'un des postes fixes comprenant une tête mobile pour serrer les plateaux (1, 2) les uns contre les autres pendant la phase de filtration et des moyens étant prévus pour écarter les plateaux les uns des autres pendant la phase de débâtissage, le filtre étant du type comprenant pour chaque plateau (1, 2) au moins une toile (4) montée mobile par rapport au plateau (1, 2) entre une position de filtration et une position de débâtissage dans laquelle la partie filtrante est dégagée vers l'extérieur pour l'extraction du gâteau de filtrage, caractérisé en ce que chaque plateau (1, 2) comprend un cadre (5) commandant le déplacement des moyens d'extraction du gâteau entre une position de filtration et une position de débâtissage, ledit cadre (5) étant constitué d'au moins deux montants (6, 7) montés coulissants dans des guides (8, 9) prévus sur les bords latéraux de chaque plateau (1, 2) et qui portent à leurs extrémités libres des traverses dont l'une porte deux doigts latéraux (13, 14) coopérant avec une barre de commande (15, 16) actionnée par des moyens de commande destinés à déplacer l'ensemble des cadres du filtre.

2. Filtre presse suivant la revendication 1, du type dans lequel chaque plateau (1, 2) comprend deux faces cambrées (33, 33') coopérant chacune avec une toile filtrante séparée (4, 4'), caractérisé en ce que ledit cadre (5) porte à ses extrémités libres des paliers pour deux paires de rouleaux de guidage (11, 12) et (18, 19), à l'autre extrémité du cadre étant prévu en regard de chacun des rouleaux (18, 19) un élément racleur (21, 22), l'un des brins de retour des deux toiles (4, 4') étant fixé par l'intermédiaire de tringles (23) et de dispositifs tendeurs (24) sur l'un des petits côtés du plateau (1, 2) tandis que l'autre brin de retour est fixé par des tringles (25) sur des crochets prévus sur l'autre petit côté dudit plateau (1, 2).

3. Filtre presse suivant la revendication 1, du type comprenant un empilement vertical de plateaux (60) dont chacun comporte une face inférieure cambrée (61) et une face supérieure plane (62) devant laquelle s'étend la toile filtrante (79) caractérisé en ce que ledit cadre (65) porte à ses extrémités libres des paliers pour deux rouleaux de guidage (72, 75) et à l'une de leurs extrémités deux guides latéraux (84, 85) coopérant avec des barres de commande (86, 87) desdits moyens de commande, l'un des brins de retour de la toile (79) étant fixé par l'intermédiaire d'une tringle (82) et un dispositif tendeur (83) sur l'un des petits côtés du plateau (60) tandis que l'autre brin de retour est fixé par une tringle (8) sur un crochet (81) prévu sur l'autre petit côté dudit plateau (1).

4. Filtre presse suivant la revendication 2 qui est du type comportant de plus des plateaux intercalaires lisses (40) servant à l'introduction du liquide à filtrer, caractérisé en ce que le cadre mobile (45) de chaque plateau intercalaire (40) comporte deux dispositifs de raclage (48, 49) se déplaçant le long des faces lisses (41, 42) du plateau (40) pour décoller le gâteau.

## Claims

1. Filter press comprising two fixed supports, interconnected by a frame formed of at least two parallel rails on which a plurality of plates (1, 2) are mounted, where between filter cloths (4) extend, one of said fixed supports having a movable head for pressing said plates (1, 2) against one another during the step of filtration, and means for separating said plates from one another during the step of clearing, with the filter being of the type comprising for each plate (1, 2) at least one filter cloth (4) mounted movably relative to the plate between a filtering position and a clearing position in chich the filter portion is disengaged outwardly for the extraction of the filter cake, characterized in that each plate (1, 2) comprises a frame (5) controlling the displacement of the extraction means for the filter cakes between a filtering position and a clearing position, said frame (5) being formed of at least two posts (6, 7) mounted slidingly in guide means (8, 9) provided at the lateral edges of each plate (1, 2) and which carry at their free ends crosspieces, one of which having two lateral fingers (13, 14) cooperating with a control bar (15, 16), actuated by control means adapted for displacing the unit of the filter frames.

2. Filter press according to claim 1 of the type in which each plate (1, 2) comprises two curved faces (33, 33'), each cooperating with a separate filter cloth (4, 4') characterized in that said frame (5') carries at its free ends bearings for two pairs of guiding rollers (11, 12 and 18, 19), and at the other end of the frame one scraper (21, 22) each is provided for said rollers (18, 19) with one return piece of said two filter cloths (4, 4') being fixed by means of rods (23) and stretching devices (24) to one of the small sides of the plate (1, 2), whereas the other return piece is fixed by rods (25) to hooks provided on the other small side of said plate (1, 2).

3. Filter press according to claim 1 of the type comprising a vertical pile of plates (60), each of which having a lower curved surface (61) and an upper plane surface (62), in front of which the filter cloth (79) extends characterized in that said frame (65) carries at its free ends bearings for two rollers (72, 75) and two lateral guide means (84, 85), cooperating with bars (86, 87) of the control means, with one of the return pieces of the filter cloth (79) being fixed, by means of a rod (82) and a stretching device (83), to one of the small sides of the plate (60), whereas the other return piece is fixed by a rod (80) to a hook (81) provided on the other small side of the plate (60).

4. Filter press according to claim 2 of the type further comprising interposed smooth plates (40) serving for the introduction of the liquid to be filtered, characterized in that the movable frame (45) of each interposed plate (40) comprises two scraping devices (48, 49) which are moved along the smooth surfaces (41, 42) of the plate (40) for removing the filter cake.

## Patentansprüche

1. Filterpresse mit zwei festliegenden Stationen, die durch einen von mindestens zwei parallelen Schienen bestehenden Rahmen verbunden sind auf denen eine Anzahl von Platten (1, 2) läuft zwischen denen sich die Filter-Tücher (9) erstrecken, in dem eine der Stationen einen beweglichen zum Zusammenschieben der Filterplatten (1, 2) dienenden Kopf träft und in dem Mittel zum Auseinanderschieben der Platten vorgesehen sind, der Filter hat ausserdem für jede Platte (1, 2) mindestens ein Filtertuch (4), das zwischen einer Filterstellung und einer Entschlammungstellung, in der der Filterteil nach aussen zum Extraktion des Schlamms gezogen wird, beweglich ist, dadurch gekennzeichnet dass jede Platte (1, 2) einen die Extraktionsmittel zwischen einer Filter- und einer Extraktionstellung bewegenden Rahmen (5) aufweist, der aus mindestens zwei in an den Seiten jeder Platte vorgesehenen Führungen (8, 9) geführten Stäben (6, 7) besteht, die an ihren Lreien Enden Ouerstangen aufweisen von denen eine zwei seitliche Finger hat (13, 14), die mit einer von den Betätigsmitteln der Rahmen der Presse betwtigten Stange (15, 16) zusammenarbeiten.

2. Filterpresse nach Anspruch 1, und in der jede Platte (1, 2) zwei gehöhlte Seitenflächen (33, 33') aufweist, von denen jede mit einem separaten Filtertuch (4, 4') arbeitet, dadurch gekennzeichnet, dass der Rahmen (5) an seinen freien Enden Lager für zwei Paar Führungsrollen (11, 12) und (18, 19) trägt, dass das andere Ende des Rahmens gegenüber jeder Rolle (18, 19) ein Abstreichorgan (21, 22) hat, dass eines der Rücklaufteile der zwei Filtertücher (4, 4') durch Stangen (23) und Ziehmittel (24) an einer der kleinen Seiten der Platte (1, 2) befestigt ist, während das andere Tuchteil durch Stangen (25) an der anderen kleinen Seite der Platte (1, 2) vorgesehenen Haken befestigt ist.

3. Filterpresse nach Anspruch 1, in der die Platten (60) horizontal übereinander liegen und jede eine ausgehöhlte Unterseite (61) und eine flache Oberseite (62), vor der das Filtertuch (79) liegt, aufweist, dadurch gekennzeichnet dass der Rahmen (65) an seinen freien Enden Lager für zwei Umbenkrollen (72, 75) aufweist während ein Ende zwei Seitenführungen (84, 85) aufweist, die mit den Stangen (86, 87) der Betätigungsmittel zusammenarbeiten, dass ein Rücklaufteil des Tuchs (79) durch eine Stange (82) und ein Ziehteil (83) an einer der kleinen Seiten der Platte (60) befestigt ist während das andere Rücklaufteil durch eine Stange (80) an einen an der anderen kleinen Seite der Platte (60) vorgesehenen Haken (81) befestigt ist.

4. Filterpresse nach Anspruch 2 mit glatten Zwischenplatten (40) zum Einbringen der zu filternden Flüssigkeit, dadurch gekennzeichnet dass der bewegliche Rahmen (45) jeder Zwischenplatte (40) zwei Abstreichmittel (48, 49) hat, die längs der glatten Seiten (41, 42) der Platte (40) verschoben werden, um den Schlamm abzustreifen.

0 117 159

Fig.1

Fig.2

0 117 159

Fig.3

0 117 159

Fig.4

Fig.5